# EUROPÄISCHE PATENTANMELDUNG

(11) **EP 1 300 617 A2**
(43) Veröffentlichungstag der Anmeldung: **09.04.2003**
(21) Anmeldenummer: 02021080.3
(22) Anmeldetag: 21.09.2002
(51) Int. Cl.: F16K 1/30

(54) **Ventilanordnung für einen unter Druck stehenden Fluidbehälter**

(30) Priorität: 05.10.2001 DE 20116336 U
(71) Anmelder: AEROSOL-TECHNIK LINDAL GMBH, D-23843 Bad Oldesloe (DE)
(72) Erfinder: Lilienthal, Hans Peter, 22587 Hamburg (DE)
(74) Vertreter: Patentanwälte Hauck, Graalfs, Wehnert, Döring, Siemons, Schildberg

(57) **Zusammenfassung**

Ventilanordnung für einen unter Druck stehenden Fluidbehälter, mit einem mit dem Behälter dichtend verbindbaren Ventilteller (10), einem in einer Öffnung des Ventiltellers festlegbaren Ventilkörper (14) aus Kunststoff, einem Ventilkolben (16) aus Kunststoff, der in einem Durchgang des Ventilkörpers geführt ist und mit einer Dichtfläche des Ventilkörpers zusammenwirkt und einer mit dem Ventilkörper zusammenwirkenden Federanordnung (26), welche den Ventilkolben gegen die Dichtfläche drückt, wobei mit dem Ventilkörper eine fluiddurchlässige Kappe (18) verbunden ist und ein nach oben weisender Abschnitt (72) des Bodens der Kappe und ein unterer Abschnitt des Kolbens (16) teleskopisch zusammenwirken und so ausgebildet sind, dass aufgrund der elastischen Verformung mindestens eines Federabschnitts auf den Kolben eine Federkraft erzeugt wird, die den Kolben gegen die Dichtfläche andrückt.

## Beschreibung

Die Erfindung bezieht sich auf eine Ventilanordnung für einen unter Druck stehenden Fluidbehälter nach dem Anspruch 1.

Ventilanordnungen für unter Druck stehende Fluidbehälter, beispielsweise Aerosolbehälter oder dergleichen sind in den verschiedensten Ausführungsformen bekannt. Bei einem dünnflüssigen zu versprühenden Medium reichen relativ kleine Kanäle in der Ventilanordnung aus, um das Medium unter Druck zu einem Sprühkopf zu fördern, von dem es dann in Form eines Sprühnebels abgegeben wird. Es ist jedoch bekannt, auch stärker viskose Medien über Druckbehälter abzugeben, beispielsweise Gele oder Schäume. Für diese Fälle ist ein größerer Durchströmquerschnitt erforderlich.

Bei Ventilanordnungen für Fluidbehälter unterscheidet man zwischen federbetätigten Ventilkolben oder Verschlussgliedern und so genannten Kippventilen. Die erfindungsgemäße Ventilanordnung bezieht sich auf federbetätigte Ventile.

Es ist bekannt, zwischen Ventilkolben und Ventilkörper eine Schraubenfeder anzuordnen, die den Ventilkolben gegen eine Dichtfläche oder einen Ventilsitz vorspannt. Aus DE 197 10 541 ist eine Ventilanordnung bekannt geworden, bei der der Ventilkolben von einer Federzunge nach oben gegen einen Dichtsitz vorgespannt wird. Die Federzunge ist Teil einer Klammer, welche auf den Ventilkörper aufgeclipst ist. Der Ventilkörper besteht aus einem Kunststoffmaterial, während die Klammer aus Federmetall geformt ist.

Der Erfindung liegt die Aufgabe zugrunde, eine Ventilanordnung für einen unter Druck stehenden Fluidbehälter zu schaffen, die vollständig aus einfach zu fertigenden und materialunaufwändigen Kunststoffteilen zusammengesetzt ist.

Diese Aufgabe wird durch die Merkmale des Anspruchs 1 gelöst.

Bei der erfindungsgemäßen Anordnung ist mit dem Ventilkörper eine fluiddurchlässige Kappe aus Kunststoff verbunden. Ein nach oben weisender Abschnitt des Bodens der Kappe und ein unterer Abschnitt des Kolbens wirken teleskopisch zusammen und sind so ausgebildet, dass aufgrund der elastischen Verformung mindestens eines Federabschnitts auf den Ventilkolben eine Federkraft erzeugt wird, die den Ventilkolben gegen die Dichtfläche andrückt.

Bei der Erfindung ist entweder der Abschnitt des Ventilkolbens oder ein Abschnitt des Bodens der Kappe federnd ausgebildet, sodass beim Ineinanderführen dieser Abschnitte eine Federkraft überwunden werden muss, die als Rückstellkraft für den Ventilkolben ausgenutzt werden kann. Diese Ausführung hat den weiteren Vorteil, dass zwischen den teleskopischen Abschnitten, zumal wenn sie axial zusammenwirken, eine Führung für den Ventilkolben gebildet ist. Der Ventilkolben ist zwar in einem axialen Durchgang des Ventilkörpers geführt, zwischen diesen beiden Teilen muss jedoch ausreichend Lose vorhanden sein, damit der Ventilkörper bei seiner Betätigung keine Hemmung erfährt. Dies bedeutet jedoch andererseits, dass der Ventilkolben leicht gekippt werden kann, was dann zu einer unerwünschten erschwerten Betätigung des Ventils kommt. Die erfindungsgemäße Ausbildung der Ventilfeder sorgt jedoch für eine ausreichende axiale Führung, sodass ein Kippen weitgehend vermieden wird.

Nach einer Ausgestaltung der Erfindung ist am Ventilkörper eine nach unten weisende kreisförmige Dichtlippe geformt, deren Innenwandung konisch ausgebildet ist, und der Kolben wirkt mit einem zylindrischen Kolbenabschnitt innerhalb der Dichtlippe mit der konischen Wandung der Dichtlippe zusammen. Zwischen Dichtlippe und zylindrischem Kolbenabschnitt kann über die Dichtlippe eine gewisse Spannung aufgebaut werden, welche die Dichtwirkung in diesem Bereich erhöht.

Nach einer weiteren Ausgestaltung der Erfindung ist der Bodenabschnitt als konischer oder balliger Zapfen geformt, der in den Zwischenraum zwischen fingerförmigen Federabschnitten eingreift, die mit Umfangsabstand zueinander auf einem Kreis angeordnet und am Ventilkolben angeformt sind. Vorzugsweise sind vier derartige Federabschnitte vorgesehen. Die inneren Enden der fingerförmigen Federabschnitte gleiten am Konus oder an der balligen Fläche des Zapfens entlang, wenn der Ventilkolben betätigt wird. Dadurch wird eine Rückstellkraft in Richtung Dichtfläche für den Ventilkolben erzeugt. Diese Rückstellkraft wird im Übrigen vom Druck im Fluidbehälter verstärkt. Die beschriebene Rückstellfederwirkung muss lediglich ausreichend sein, den zylindrischen Kolbenabschnitt mit der Dichtfläche bzw. der inneren Wandung der Dichtlippe in Eingriff zu bringen. Danach wird die Schließkraft im Wesentlichen vom Innendruck im Fluidbehälter aufgebracht.

Nach einer anderen Ausgestaltung der Erfindung weist die Kappe einen ringförmigen Abschnitt auf, der mit einem inneren Ringwulst einen radialen Abschnitt des Gehäuses schnappend hintergreift. Das untere Ende des Ventilkörpers kann dabei mit einem radialen Flanschabschnitt des ringförmigen Abschnitts zur Anlage kommen, um die Kappe am Ventilkörper axial und radial zu sichern. Der Boden der Kappe ist vorzugsweise über beabstandete Segmente mit dem Flanschabschnitt verbunden. Zwischen den Segmenten ist ausreichend Durchgangsmöglichkeit für das Medium geschaffen. Die Segmente können auf einem Kegelmantel liegend angeordnet sein, da der Boden der Kappe nur einen Durchmesser aufweisen muss, der die Anformung des Zapfens erlaubt und eine freie Bewegung des Federabschnitts des Kolbens relativ zur Kappe.

Der Ventilteller, mit dessen Hilfe die Ventilanordnung in der Öffnung des Fluidbehälters befestigt wird, weist eine innere Öffnung auf, in der die Ventilanordnung bzw. der Ventilkörper eingesetzt wird. Der Ventilteller hat nach einer Ausgestaltung der Erfindung einen nach oben gebogenen ringförmigen Abschnitt, der mit einer ringförmigen Nut an der Außenseite des Ventilkörpers dichtend zusammenwirkt. Die Nut weist vorzugsweise eine Zahnung auf, um den Halt des Ventilkörpers und die Abdichtung zu verbessern. Außerdem kann diejenige Nutwandung eine Schräge oder einen gerundeten Abschnitt aufweisen, in dem sich die Biegung des axialen Flanschabschnitts befindet.

Ein Ausführungsbeispiel der Erfindung soll nachfolgend anhand eines Zeichnungen dargestellten Beispiels näher erläutert werden.
Fig. 1 zeigt im Schnitt eine Ventilanordnung nach der Erfindung.
Fig. 2 zeigt im Schnitt teilweise in Seitenansicht einen Ventilkolben der Ventilanordnung nach Fig. 1.
Fig. 3 zeigt die Untersicht unter den Ventilkolben nach Fig. 2.
Fig. 4 zeigt die Draufsicht auf den Ventilkolben nach Fig. 2.
Fig. 5 zeigt die Seitenansicht des Ventilkörpers der Ventilanordnung nach Fig. 1.
Fig. 6 zeigt im Schnitt einen Teil des Ventilkörpers nach Fig. 5.

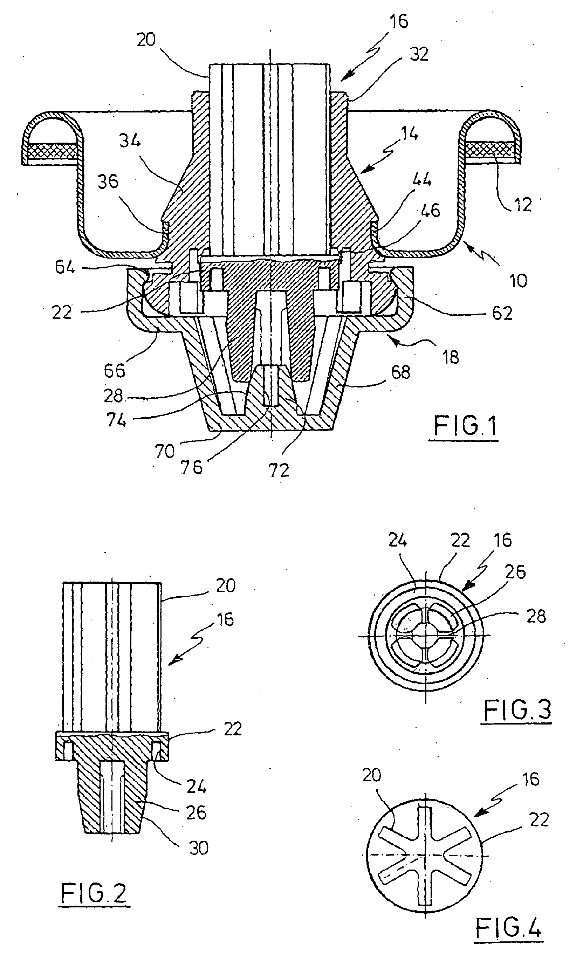

Die in Fig. 1 dargestellte Ventilanordnung für einen Fluidbehälter weist einen Ventilteller 10 auf zur Anbringung an einem nicht gezeigten Fluidbehälter über eine Dichtung 12. In der Öffnung des Ventiltellers 10 sitzt ein Ventilkörper 14 aus Kunststoffmaterial. Der hülsenförmige Ventilkörper 14 nimmt einen Ventilkolben 16 auf. Unterhalb des Ventiltellers 10 ist eine Kappe 18 am Ventilkörper 14 befestigt. Nachfolgend werden die einzelnen Teile der Ventilanordnung nach Fig. 1 erläutert.

Der Ventilkolben 16 weist einen Schaft 20 auf, der im Schnitt sternförmig ist, wie sich aus Fig. 4 ergibt. Der Schaft ist mit relativ viel Spiel im Durchgang des Ventilkörpers 14 geführt. Unterhalb des Schaftes 20 ist ein im Durchmesser etwas größerer zylindrischer Kolbenabschnitt 22 vorgesehen, der an der Unterseite eine Ringnut 24 aufweist. An den Kolbenabschnitt 22 sind vier fingerförmige Federabschnitte 26 angeformt, deren Kontur aus Fig. 3 zu erkennen ist. An der einander zugekehrten Seite sind die Federabschnitte 26 durch gerade Flächen begrenzt, die einen geraden recht- oder viereckigen Durchgang bilden. Zwischen den Federabschnitten sind Schlitze 28 vorgesehen. Die Federabschnitte 26 sind am unteren Ende an der Außenseite durch eine entsprechende Schrägung 30 verjüngt.

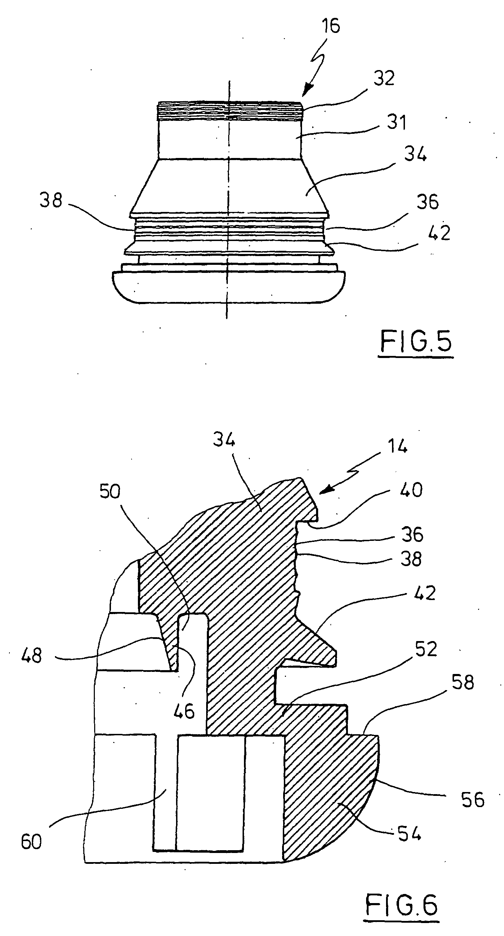

Der Ventilkörper 14 weist am oberen Ende eine Art Zahnung 32 auf, durch welche eine Abdichtung herbeigeführt wird durch einen aufgesteckten Rohrabschnitt, beispielsweise eines entsprechenden Austragkopfs (nicht gezeigt). Unterhalb des gezeigten Abschnitts 32, der an einem zylindrischen Abschnitt geformt ist, schließt sich ein konischer Abschnitt 34 an, in den eine Ringnut 36 eingeformt ist. Wie sich aus Fig. 6, aber auch aus Fig. 5 ergibt, ist der Boden der Ringnut 36 mit einer leichten Zahnung 38 geformt. Während die obere Nutwandung 40 radial verläuft, ist die untere Nutwandung 42 schräg geformt mit einem gerundeten Übergang zum Nutboden 36. Aus Fig. 1 ist zu erkennen, dass ein nach axial umgebogener innerer Abschnitt 44 des Ventiltellers 10 klemmend in der Ringnut 36 einsitzt. Durch die beschriebene konstruktive Ausbildung der Ringnut 36 ist ein dichtes und sicherndes Zusammenwirken zwischen dem Abschnitt 44 und der Ringnut 36 geschaffen.

Unterhalb des Durchgangs des Ventilkörpers 14 ist eine ringförmige axial sich erstreckende Dichtlippe 46 geformt, die eine konische Innenwandung 48 aufweist, wie insbesondere aus Fig. 6 hervorgeht. Neben der Dichtlippe 36 ist eine sich axial erstreckende Ringnut 50 geformt.

Wie sich ebenfalls aus Fig. 1 ergibt, befindet sich der ringzylindrische Kolbenabschnitt 22 innerhalb der Dichtlippe 46, wobei die Kante des Kolbenabschnitts 22 dichtend mit der Wandung 48 zusammenwirkt.

Über einen radialen Stegabschnitt 52 des Ventilkörpers 14 ist ein Ringabschnitt 54 an dem Ventilkörper 14 angeformt, der außen eine gerundete Kontur bei 56 aufweist. Der Stegabschnitt 52 geht über einen Absatz 58 in den Ringabschnitt 54 über. An der Innenseite weist der Ringabschnitt 54 mehrere radiale Rippen 60 auf, die in gleichmäßigem Umfangsabstand angeordnet sind.

Die Kappe 18 weist einen Ringabschnitt 62 auf, der an der Innenseite oben einen Ringwulst 64 aufweist. Bei der Montage wird die Kappe 18 von unten gegen den Ventilkörper 14 gepresst, wobei der Ringwulst 44, der eine gerundete Außenkontur im Querschnitt aufweist, über den gerundeten Abschnitt 56 des Ringabschnitts 54 gleitet. Letzterer wird leicht nach unten und einwärts gebogen, sodass der Wulst sich bis zum Absatz 58 bewegen kann, bis er hinter den Absatz 58 schnappt, um die Kappe 18 wirksam am Ventilkörper 14 festzulegen. Das untere Ende des Ventilkörpers 14 liegt dabei gegen einen sich radial erstreckenden Flanschabschnitt 66, sodass die Kappe 18 sowohl radial als auch axial gesichert am Ventilkörper 14 gehalten ist.

An den Flanschabschnitt 66 sind mehrere Segmente 68 angeformt, die einen Abstand zueinander haben und sich aufeinander zu laufend nach unten erstrecken und mit einem Boden 70 verbunden sind. Auf der Innenseite des Bodens 70 ist ein Zapfen 72 geformt, der eine ballige Außenkontur 74 aufweist. Von oben her ist in den Zapfen 72 ein Sackloch 76 eingeformt.

Beim bereits beschriebenen Aufsetzen der Kappe 18 auf den Ventilkörper 14 dringt der Zapfen 72 in den Zwischenraum zwischen den Federabschnitten 28 ein und die Federabschnitte 28 werden auf diese Weise elastisch auseinander gebogen. Auf diese Weise wird eine nach oben wirkende Federkraft auf den Ventilkolben 16 ausgeübt und der Kolbenabschnitt 72 dichtend mit der Innenwandung 48 der Dichtlippe 46 in Eingriff gebracht. Wird der Ventilkolben 16 durch Druck von oben nach unten bewegt, werden die Federsegmente weiter gespreizt und erhöhen die Federkraft, sodass eine ausreichende Rückstellkraft aufgebaut wird, die den Ventilkolben 16 zurückstellt, wenn die von oben auf den Ventilkolben wirkende Kraft fortfällt.

## Patentansprüche

1. Ventilanordnung für einen unter Druck stehenden Fluidbehälter, mit einem mit dem Behälter dichtend verbindbaren Ventilteller, einem in einer Öffnung des Ventiltellers festlegbaren Ventilkörper aus Kunststoff, einem Ventilkolben aus Kunststoff, der in einem Durchgang des Ventilkörpers geführt ist und mit einer Dichtfläche des Ventilkörpers zusammenwirkt und einer mit dem Ventilkörper zusammenwirkenden Federanordnung, welche den Ventilkolben gegen die Dichtfläche drückt, **dadurch gekennzeichnet, dass** mit dem Ventilkörper (16) eine fluiddurchlässige Kappe (18) verbunden ist und ein nach oben weisender Abschnitt (72) des Bodens (70) der Kappe (18) und ein unterer Abschnitt (28) des Kolbens (16) teleskopisch zusammenwirken und so ausgebildet sind, dass aufgrund der elastischen Verformung mindestens eines Federabschnitts (28) auf den Kolben (16) eine Federkraft erzeugt wird, die den Kolben (16) gegen die Dichtfläche (48) andrückt.

2. Ventilanordnung nach Anspruch 1, **dadurch gekennzeichnet, dass** am Ventilkörper (14) eine nach unten weisende kreisförmige Dichtlippe (46) geformt ist, deren Innenwandung (48) konisch ausgebildet ist und der Kolben mit einem zylindrischen Kolbenabschnitt (22) innerhalb der Dichtlippe (46) angeordnet ist und mit der konischen Wandung (48) dichtend zusammenwirkt.

3. Ventilanordnung nach Anspruch 1 oder 2, **dadurch gekennzeichnet, dass** der Bodenabschnitt (70) einen konischen oder balligen Zapfen (72) aufweist, der in den Zwischenraum zwischen fingerförmigen Federabschnitten (28) eingreift, die mit Umfangsabstand zueinander auf einem Kreis angeordnet und am Ventilkörper (16) angeformt sind.

4. Ventilanordnung nach Anspruch 3, **dadurch gekennzeichnet, dass** vier Federabschnitte (28) vorgesehen sind.

5. Ventilanordnung nach einem der Ansprüche 1 bis 4, **dadurch gekennzeichnet, dass** die Kappe (18) einen ringförmigen Abschnitt (62) aufweist, der mit einem inneren Ringwulst (64) einen radialen Abschnitt (54) des Ventilkörpers (14) schnappend hintergreift, wobei das untere Ende des Ventilkörpers (14) mit einem radialen Flanschabschnitt (66) des ringförmigen Abschnitts (62) zur Anlage kommt, um die Kappe (18) am Ventilkörper (14) axial und radial zu sichern und der Boden (70) der Kappe (18) über beabstandete Segmente (68) mit dem Flanschabschnitt (66) verbunden ist.

6. Ventilanordnung nach einem der Ansprüche 1 bis 5, **dadurch gekennzeichnet, dass** ein abgebogener axialer, die innere Öffnung des Ventiltellers (10) begrenzender Tellerabschnitt (44) klemmend in einer Ringnut (36) des Ventilkörpers (14) einsitzt.

7. Ventilanordnung nach Anspruch 6, **dadurch gekennzeichnet, dass** die untere Wand (42) der Ringnut (36) im Schnitt bogenförmig oder schräg geformt ist zur Anpassung an die Krümmung des Ventiltellers (10) in diesem Bereich.

8. Ventilanordnung nach Anspruch 6 oder 7, **dadurch gekennzeichnet, dass** der Boden der Ringnut (36) eine umlaufende Zahnung (38) aufweist.

9. Ventilanordnung nach einem der Ansprüche 5 bis 8, **dadurch gekennzeichnet, dass** der radiale Abschnitt (54) so am Ventilkörper (14) angeformt ist, dass er beim Aufschnappen des ringförmigen Abschnitts (62) der Kappe (18) nach unten verformbar ist.
